# EUROPEAN PATENT APPLICATION

(11) **EP 4 624 118 A1**
(43) Date of publication of application: **01.10.2025**
(21) Application number: 25163611.4
(22) Date of filing: 13.03.2025
(51) Int. Cl.: B25J 15/06

(54) **END EFFECTOR ASSEMBLY**

(30) Priority: 27.03.2024 US 202418617952
(71) Applicant: The Boeing Company, Arlington, VA 22202 (US)
(72) Inventor: SERENCSITS, William L., ARLINGTON, 22202 (US); VELASQUEZ, Luis F., ARLINGTON, 22202 (US); PARRISH, Clay R., ARLINGTON, 22202 (US)
(74) Representative: Plasseraud IP

(57) **Abstract**

An end effector assembly includes a housing and a permeable component. The housing includes a first component having a first edge and a second edge spaced from each other relative to a central axis to define a pocket therebetween. The housing also includes a second component attached to the first edge of the first component. The housing further includes a third component attached to the second edge of the first component. The first component, the second component, and the third component cooperate with each other to close the pocket. The permeable component is contained inside of the pocket. The third component defines a plurality of perforations to allow fluid communication through the third component.

## Description

### CROSS-REFERENCE TO RELATED APPLICATIONS

This application claims the benefit of U.S. Provisional Application No. 63/498613, filed on April 27, 2023.

### BACKGROUND

Various end effectors have been designed to grab and release various parts in a desired location. The end effectors may be coupled to a machine that moves the part to the desired location. Depending on the configuration of the parts, materials of the parts, and the state of the parts, some end effectors may cause undesirable marks, such as indentations, wrinkles, creases, twists, etc., to the parts when the part is grabbed by the end effector and/or when the part is moved or placed to the desired location.

### SUMMARY

Therefore, it is desirable to develop an end effector assembly that may grab or pick up a part and place the part in a desired location without leaving undesirable marks on the part. In addition, it is desirable to develop an end effector assembly that may apply compaction to the part without leaving undesirable marks on the part. The end effector assembly described herein may perform both of the above tasks, i.e., pick and place, and compaction.

The present disclosure pertains to an end effector assembly that includes a housing and a permeable component. The housing includes a first component having a first edge and a second edge spaced from each other relative to a central axis to define a pocket therebetween. The housing also includes a second component attached to the first edge of the first component. The housing further includes a third component attached to the second edge of the first component. The first component, the second component, and the third component cooperate with each other to close the pocket. The permeable component is contained inside of the pocket. The third component defines a plurality of perforations to allow fluid communication through the third component.

The present disclosure also provides an assembly configured to move and/or compact a part. The assembly includes a part support structure configured to support the part. The assembly also includes an end effector assembly attached to the part support structure. The end effector assembly includes a housing. The housing includes a first component having a first edge and a second edge spaced from each other relative to a central axis to define a pocket therebetween, a second component attached to the first edge of the first component, and a third component attached to the second edge of the first component. The first component, the second component, and the third component cooperate with each other to close the pocket. The end effector assembly also includes a permeable component contained inside of the pocket. The third component defines a plurality of perforations to allow fluid communication through the third component.

The detailed description and the drawings or FIGS. are supportive and descriptive of the disclosure, but the claim scope of the disclosure is defined solely by the claims. While some of the best modes and other configurations for carrying out the claims have been described in detail, various alternative designs and configurations exist for practicing the disclosure defined in the appended claims.

### BRIEF DESCRIPTION OF THE DRAWINGS

FIG. 1 is a schematic perspective view of an end effector assembly attached to a part support structure of a first configuration.
FIG. 2 is a schematic perspective view of the end effector assembly attached to a part support structure of a second configuration.
FIG. 3 is a schematic illustration of the end effector assembly relative to a part, with some of the features of the end effector assembly in an exploded view, and illustrating in dash-dot-dot-dash lines the direction of fluid flow when the vacuum is applied to the end effector assembly.
FIG. 4 is a schematic perspective view of the end effector assembly.
FIG. 5 is another schematic perspective view of the end effector assembly from a different orientation.
FIG. 6 is a schematic exploded view of the end effector assembly.
FIG. 7 is a schematic perspective view of the end effector assembly and the part support structure of FIG. 1, with a part locating apparatus being illustrated.
FIG. 8 is a schematic perspective view a part contained between a part support structure and a base platform.
FIG. 9 is a schematic end view of the part disposed between the part support structure and the base platform prior to compaction.

The present disclosure may be extended to modifications and alternative forms, with representative configurations shown by way of example in the drawings and described in detail below. Inventive aspects of the disclosure are not limited to the disclosed configurations. Rather, the present disclosure is intended to cover modifications, equivalents, combinations, and alternatives falling within the scope of the disclosure as defined by the appended claims.

### DETAILED DESCRIPTION

Those having ordinary skill in the art will recognize that all directional references (e.g., above, below, upward, up, downward, down, top, bottom, left, right, vertical, horizontal, etc.) are used descriptively for the FIGS. to aid the reader's understanding, and do not represent limitations (for example, to the position, orientation, or use, etc.) on the scope of the disclosure, as defined by the appended claims. Moreover, terms such as "first," "second," "third," and so on, may be used to describe separate components. Such terminology may include the words specifically mentioned above, derivatives thereof, and words of similar import. Furthermore, the term "substantially" can refer to a slight imprecision or slight variance of a condition, quantity, value, or dimension, etc., some of which are within manufacturing variance or tolerance ranges.

As used herein, an element or step recited in the singular and preceded by the word "a" or "an" should be understood as not necessarily excluding the plural of the elements or steps. Further, any reference to "one configuration" is not intended to be interpreted as excluding the existence of additional configurations that also incorporate the recited features. Moreover, unless explicitly stated to the contrary, configurations "comprising" or "having" an element or a plurality of elements having a particular property may include additional elements not having that property. The phrase "at least one of" as used herein should be construed to include the non-exclusive logical "or", i.e., A and/or B and so on depending on the number of components.

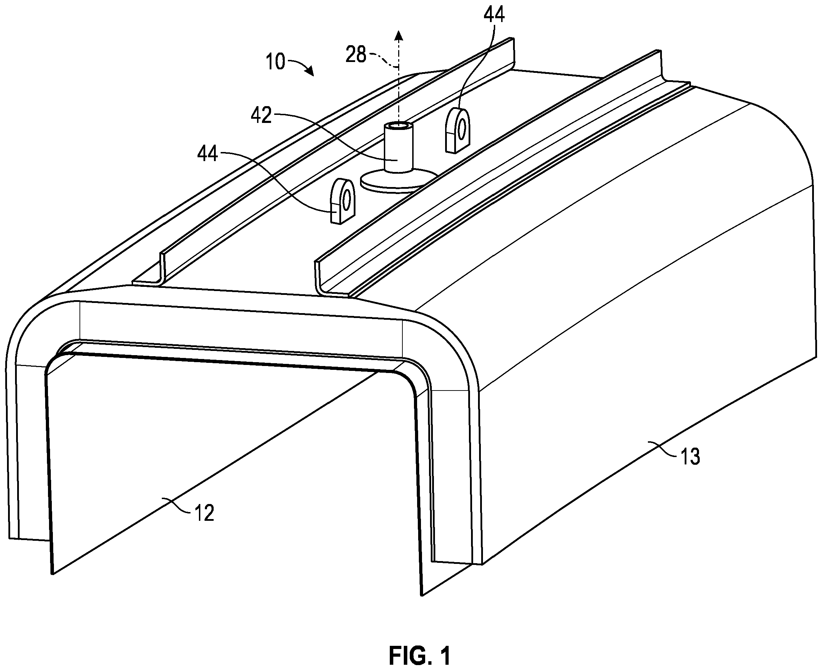

Referring to the figures, wherein like numerals indicate like or corresponding parts throughout the several views, an end effector assembly 10 is generally shown in FIG. 1. An assembly, including the end effector assembly 10, is generally used in a factory or manufacturing facility to assist with moving various parts 12 and, optionally, assist with compaction of the various parts 12. That is, the assembly is configured to move and/or compact the part 12, each of which is discussed further below.

In some situations, it is desirable to move the parts 12 to different locations in the facility. Sometimes the parts 12 are moved from one manufacturing process to another manufacturing process. For example, the parts 12 may be moved from one work station to another work station, where one or more of the parts 12 are assembled into a subassembly and then the assembled subassembly is moved as a unit to another work station for another assembly process., etc. Non-limiting examples of the parts 12 may include stiffeners, C-spar shape, spars, blades, stringers, blade stringers, hat stringers, fuselage stringers, beams, panels, performs, frames, Z frames, skins, door surround padups, window surround padups, equipment, etc.

To move the end effector assembly 10 from one location to another location, a machine may be used. The end effector assembly 10 is coupled to the machine, and the machine is configured to move the end effector assembly 10 to a desired location. Therefore, the machine supports the end effector assembly 10. As non-limiting examples, the machine may include one or more of a robot, a robotic arm, an automation machine, a factory machine, a crane, a hand lifting assembly, or any other suitable machine that may move the end effector assembly 10 to the desired location. In addition, the machine may include one or more of a rigid component and/or a flexible component that moves the end effector assembly 10. The rigid component of the machine may be configured to maintain its shape when a load is applied, i.e., stiff or not flexible. The flexible component of the machine may be capable of being bent and/or stretched without permanent deformation and without breaking when a load is applied due to lifting of the part 12, and return to its original configuration when the load is removed due to releasing of the part 12.

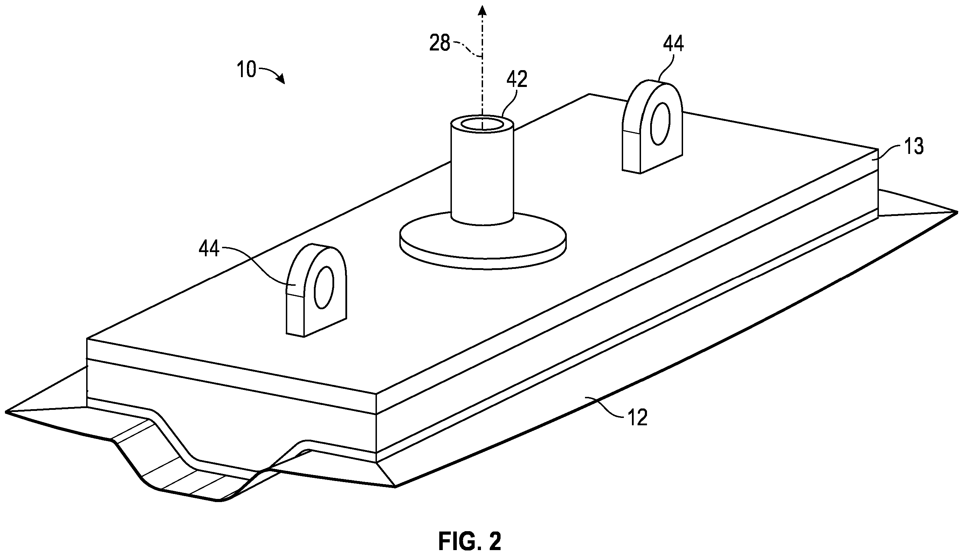

The part 12 may be any desired configuration, and two different part 12 configurations are shown in the figures (compare the parts 12 illustrated in FIGS. 1 and 2). Also, the part 12 may be in any suitable state, and non-limiting examples include a green state, an unimpregnated state, a pre-impregnated state, an uncured state, a partially cured state, a fully cured state, a high temperature state, a low temperature state, a dry fiber preform, a dry fiber composite, a non-crimped fabric (NCF) perform, or any other suitable states. The high temperature state may refer to temperatures that would not be suitable for manual handling.

Optionally, a part support structure 13 may extend outwardly beyond the end effector assembly 10. The assembly may include the part support structure 13 configured to support the part 12. In addition, the part support structure 13 may be configured with complementary features to the features of the part 12. The end effector assembly 10 is attached to the part support structure 13. FIGS. 1 and 2 illustrate two different examples of the part support structure 13 which cooperate with the two different configurations of the part 12.

One end effector assembly 10 or a plurality of end effector assemblies 10 may be used to pick up the part 12 depending on various characteristics of the part 12, such as, the length of the part 12, the width of the part 12, the weight of the part 12, the configuration of the part 12, the state of the part 12, etc. The discussion herein describes one end effector assembly 10, but it is to be appreciated that any suitable number of end effector assemblies 10 may be used to pick up the part 12, and each of the end effector assemblies 10 may have the configuration/features described herein.

The end effector assembly 10 may pick up one part 12 at a time or pick up a plurality of parts 12 at a time. Depending on the characteristics of the part 12, more than one end effector assembly 10 may be used to pick up the part 12. When using a plurality of end effector assemblies 10, the end effector assemblies 10 are spaced apart from each other to uniformly pick up the part 12. It is to be appreciated that the end effector assembly(s) 10 may pick up a plurality of parts 12 at the same time. Once the desired location is reached, the end effector assembly 10 may release the part 12.

Optionally, compaction of the part 12 may occur once the end effector assembly 10 contacts the part 12. Compaction is generally related to compacting, compressing, pressing and/or squeezing the part 12 and/or the layers of the part 12 together when the vacuum is applied which may remove gaseous fluid from the part 12 and/or further bond the material(s)/layers of the part 12 together and/or achieve a desired laminate thickness. Generally, compaction of the part 12 may occur when the part 12 is in the green state, the uncured state, and/or the unimpregnated state, etc., i.e., not in the fully cured state.

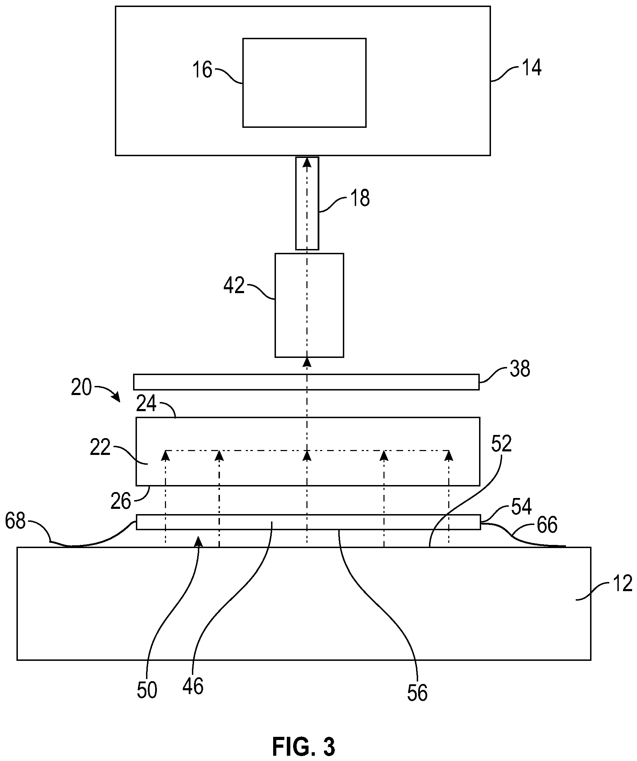

Referring to FIG. 3, a vacuum assembly 14 is coupled to the end effector assembly 10 and is configured to create a vacuum that is used to pick up the part 12 and/or used to compact the part 12. Therefore, the vacuum assembly 14 may include a vacuum pump 16 which is selectively turned on and off, and includes a conduit 18 attached to the vacuum pump 16 and the end effector assembly 10 to connect fluid flow between the vacuum pump 16 and the end effector assembly 10. Hence, the vacuum may be directed to the end effector assembly 10 via the conduit 18. Specifically, when the vacuum assembly 14 is turned on and the end effector assembly 10 is engaging the part 12, the vacuum is directed through the end effector assembly 10, which creates suction that is applied to the part 12 to attach the part 12 to the end effector assembly 10. The dash-dot-dot-dash arrow-headed lines of FIG. 3 illustrate the direction of fluid flow when the vacuum assembly 14 is turned on. It is to be appreciated that depending on the number of end effector assemblies 10 being used, a plurality of conduits 18 may be used, with each of the conduits 18 connected to respective ones of the end effector assemblies 10. It is to also be appreciated that a plurality of vacuum pumps 16 may be used as well.

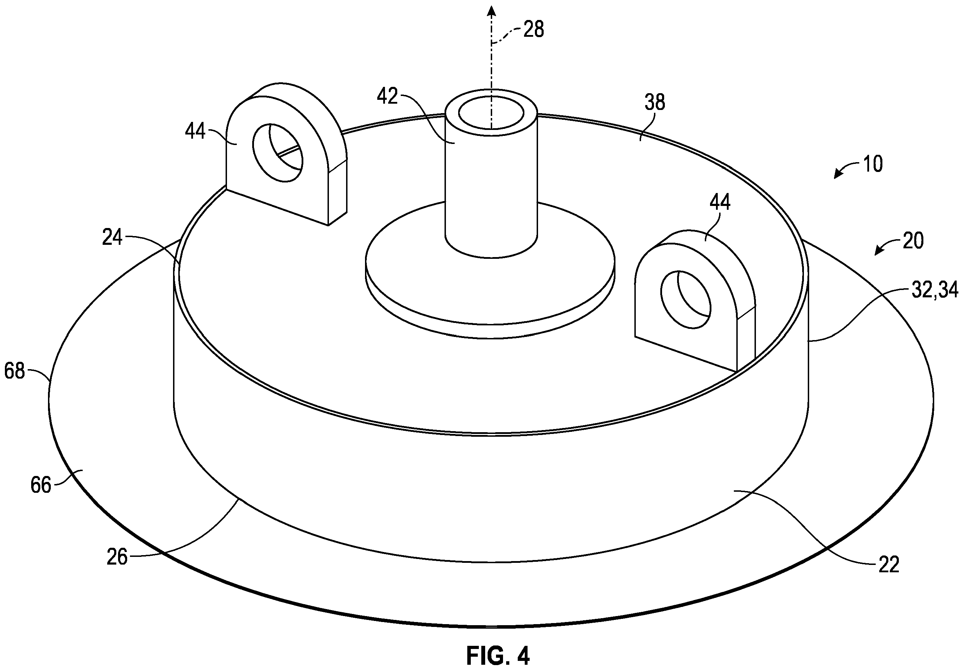

Next, referring to FIGS. 4-6, the end effector assembly 10 includes a housing 20 configured to be coupled to the machine. The housing 20 is configured to support the part 12 when picked up and moved. Also, the housing 20 is configured to withstand the loads applied thereto when the vacuum is applied via the vacuum assembly 14, i.e., the housing 20 does not collapse due to the loads applied thereto via the vacuum.

Continuing with FIGS. 4-6, the housing 20 includes a first component 22 having a first edge 24 and a second edge 26 spaced from each other relative to a central axis 28 to define a pocket 30 therebetween. The first component 22 may include a band having any suitable configuration, and non-limiting examples of the configuration of the band may include circular, triangular, square, polygon, star, irregular polygon, oval, rectangular, ellipse, etc.

The first component 22, e.g., the band, may include a wall 32 having an outer surface 34 and an inner surface 36 opposing the outer surface 34, and the wall 32 defines an outer boundary of the pocket 30. Therefore, the pocket 30 is disposed inside of the inner surface 36 of the wall 32. The wall 32 may include the first edge 24 and the second edge 26, and therefore, the outer surface 34 and the inner surface 36 are disposed between the first edge 24 and the second edge 26. In certain configurations, the outer surface 34 and the inner surface 36 are spaced transverse from the central axis 28.

Generally, the first component 22 may be configured of one or more materials that provide strength to support the part 12 as well as resistance to the loads applied thereto when the vacuum is applied via the vacuum assembly 14. That is, the first component 22 may be configured to provide structural rigidity. Therefore, the first component 22 may be formed of a rigid material such that the first component 22 maintains its configuration regardless of the task being performed by the end effector assembly 10. Non-limiting examples of the rigid material of the first component 22 may include one or more of metal or metallic materials, polymer materials, composite materials, reinforced materials, or any other suitable material that provides strength to support the part 12 and is resistance to loads applied via the vacuum assembly 14.

Continuing with FIGS. 4-6, the housing 20 includes a second component 38 attached to one of the first edge 24 and the second edge 26. In certain configurations, the second component 38 is attached to the first edge 24 of the first component 22. Therefore, the second component 38 may close one end of the pocket 30.

Generally, the second component 38 may be configured of one or more materials that provide strength to support the part 12 as well as resistance to the loads applied thereto when the vacuum is applied via the vacuum assembly 14. That is the second component 38 may be configured to provide structural rigidity. Therefore, the second component 38 may be formed of a rigid material such that the second component 38 maintains its configuration regardless of the task being performed by the end effector assembly 10. Non-limiting examples of the rigid material of the second component 38 may include the one or more of metal or metallic materials, polymer materials (which may include a carbon-fiber-reinforced polymer as one example), composite materials, reinforced materials, or any other suitable material that provides strength to support the part 12 and is resistance to loads applied via the vacuum assembly 14. Optionally, the second component 38 may be formed of a lightweight material, and may optionally be formed of the same materials as the first component 22 or formed of different materials from the first component 22. In certain configurations, the second component 38 may be referred to as an outer skin or outer layer.

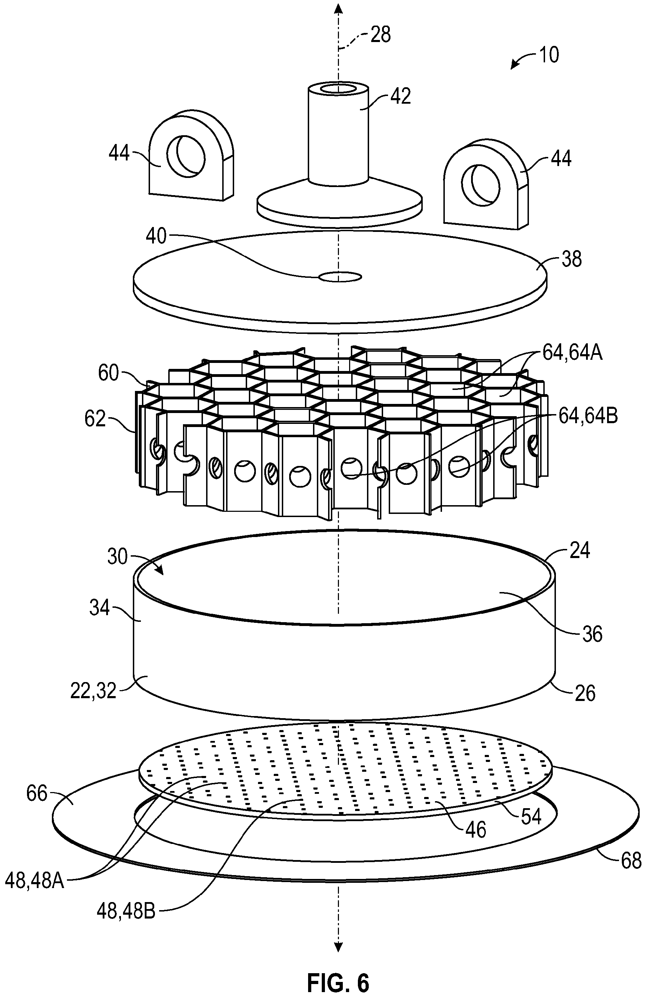

Referring to FIG. 6, the second component 38 may define an aperture 40 in fluid communication with the pocket 30. Generally, the aperture 40 provides fluid communication into and out of the end effector assembly 10. In certain configurations, the aperture 40 may be disposed coaxial with the central axis 28.

Generally, the conduit 18 is coupled to the aperture 40 to allow fluid communication between the vacuum assembly 14 and the housing 20. Therefore, the end effector assembly 10 may include a fitting 42 attached to the second component 38 at the aperture 40. The fitting 42 surrounds the apertures 40 such that fluid communication is directed through the aperture 40 into and out of the fitting 42. Therefore, the conduit 18 of the vacuum assembly 14 is connected to the fitting 42 to provide fluid communication between the vacuum assembly 14 and the housing 20. As such, fluid flow into and out of the housing 20 occurs via the fitting 42/the aperture 40. Generally, the fluid that flows through the end effector assembly 10 is a gaseous fluid, and in certain configurations, the fluid is air.

Referring to FIGS. 4-6, the housing 20 may include one or more anchors 44 disposed outside of the housing 20. The machine is attached to the anchors 44 such that the machine supports the end effector assembly 10. In certain configurations, the anchors 44 are fixed to the second component 38. It is to be appreciated that one or more of the anchors 44 may be fixed to the first component 22 and/or the second component 38.

Continuing with FIGS. 4-6, the housing 20 also includes a third component 46 attached to the other one of the first edge 24 and the second edge 26 of the first component 22. In certain configurations, the third component 46 is attached to the second edge 26 of the first component 22. Therefore, the third component 46 may close another end of the pocket 30. As such, the second component 38 and the third component 46 close opposing ends of the pocket 30.

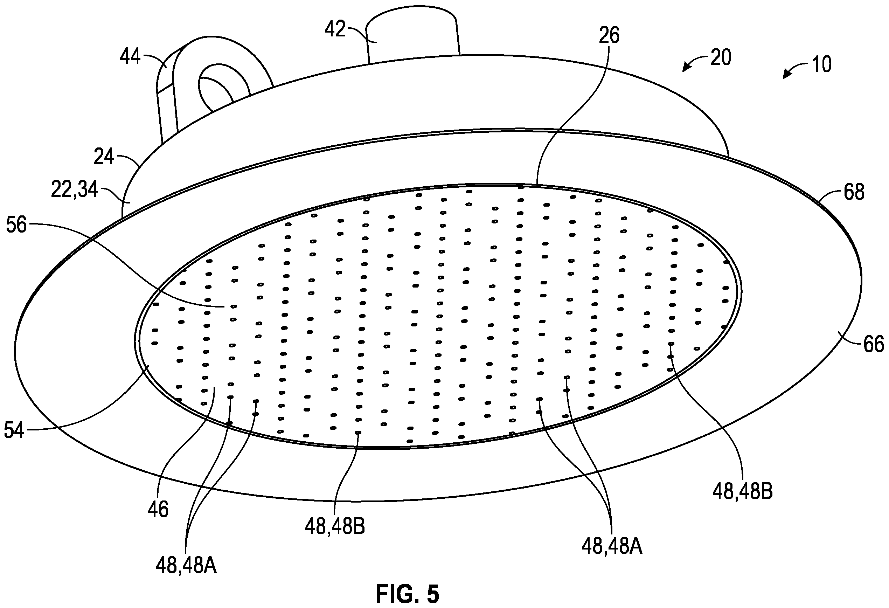

As best shown in FIGS. 5 and 6, the third component 46 may define a plurality of perforations 48 to allow fluid communication through the third component 46. The vacuum assembly 14 is configured to create the vacuum to cause the part 12 to engage the third component 46 for moving the part 12 and/or for compacting the part 12. Therefore, when the third component 46 engages the part 12 and the vacuum assembly 14 is turned on, fluid flow occurs through the perforations 48 and the pocket 30, outwardly toward the vacuum assembly 14 which causes the part 12 to attach to the third component 46. In other words, when the vacuum is applied, the fluid flow is pulled through the perforations 48 into the pocket 30, and the fluid flow continues out of the pocket 30 via the aperture 40 and then toward the vacuum assembly 14. FIG. 3 illustrates the fluid flow (dash-dot-dot-dash lines) out of a space 50 between the third component 46 and the part 12, via the perforations 48, through the pocket 30, and out through the fitting 42 toward the vacuum assembly 14.

The perforations 48 may be any suitable configuration to allow fluid communication through the third component 46. In certain configurations, the perforations 48 are substantially the same. In other configurations, some or all of the perforations 48 are different from each other. Therefore, for example, the perforations 48 may include a first set 48A of perforations 48 of a first configuration, and a second set 48B of perforations 48 of a second configuration different from the first configuration of the first set 48A of perforations 48, and so on depending on the desired number of different sets of perforations 48.

In addition, the perforations 48 may be any suitable pattern including, for example, uniform patterns, organized patterns, and random patterns, etc. For example, the perforations 48 may include the first set 48A of perforations 48 of a first pattern and the second set 48B of perforations 48 of a second pattern different from the first pattern of the first set 48A of perforations 48.

One example is shown in FIG. 5, two different sets of perforations 48 are illustrated and the patterns alternate between the first set 48A of perforations 48 and the second set 48B of perforations 48. For example, referring to FIG. 5, the first set 48A of perforations 48 form two lines of perforations 48 next to each other having a first size, and the second set 48B of perforations 48 form a single line of perforations 48 having a second size being the same size or a different size from the first size, and the single line of perforations 48 of the second set 48B is disposed between the two lines of perforations 48 of the first set 48A. That is, one line of the second set 48B of perforations 48 separates two lines of the first set 48A of the perforations 48.

Optionally, as shown in FIG. 5, the first set 48A of perforations 48 may form a pattern having a plurality of spaced apart groupings of perforations 48 in a line such that each of the first set 48A of perforations 48 are not evenly spaced across the line. For illustrative purposes only,

FIG. 5 illustrates the first set 48A of perforations 48 forming a plurality of groups being two perforations 48 in each of the groups along a line, and a gap is disposed between each of the groups of the first set 48A of perforations 48. Continuing with FIG. 5, the second set 48B of perforations 48 may form a pattern having perforations 48 evenly spaced apart from each other in a line.

As discussed above, the third component 46 engages the part 12 to pick up the part 12. Therefore, the third component 46 may engage a face surface 52 (see FIG. 3) of the part 12 to pick up the part 12. When the vacuum assembly 14 is turned on when the third component 46 engages the part 12, the fluid is pulled out of the space 50 between the third component 46 and the face surface 52 of the part 12 and pulled out of the pocket 30 of the housing 20 to create a pressure less than atmospheric pressure to attach the part 12 to the housing 20 via the third component 46. Simply stated, the part 12 is suctioned to the end effector assembly 10 when the vacuum is creating a pressure difference.

The perforations 48 are disposed across the third component 46 such that the vacuum is distributed across the part 12 as well as across the third component 46. That is, the perforations 48 are disposed across the third component 46 to evenly distribute the vacuum across the part 12 and the third component 46. As such, the vacuum is applied to a surface area of the part 12.

Turning to FIG. 6, the third component 46 extends to an outer edge 54 transverse to the central axis 28 to define an outer boundary of the third component 46. Generally, the part 12 is larger than the third component 46 such that the entire third component 46, i.e., the third component 46 out to the outer edge 54, engages the part 12 when the part 12 is being picked up, which assists with preventing vacuum leakage around the end effector assembly 10 when the vacuum is being applied. That is, having the entire third component 46 engage the face surface 52 of the part 12 assists with ensuring that the desired holding force is applied to the part 12.

In certain configurations, the third component 46 is configured to provide a predetermined amount of flexibility to allow the third component 46 to contour to the part 12 due to variations in the part 12, predetermine tolerances of the part 12, the state of the part 12 (fully cured, etc.), and/or imperfections in the part 12, etc. Also, in certain configurations, the third component 46 may provide a predetermined amount of rigidity due to contours in the part 12, predetermine tolerances of the part 12, and/or the state of the part 12 (uncured, etc.), etc.

Therefore, the third component 46 may be formed of one or more materials that allows the predetermined amount of flexibility and/or the predetermined amount of rigidity. The rigid material of the third component 46 may be configured to maintain its shape when a load is applied, i.e., stiff or not flexible. The flexible material of the third component 46 may be capable of being bent and/or stretched without permanent deformation and without breaking when the load is applied due to lifting of the part 12, and return to its original configuration when the load is removed due to releasing of the part 12.

Non-limiting examples of the rigid material of the third component 46 may include the one or more of metal or metallic materials, polymer materials (which may include a carbon-fiber-reinforced polymer as one example), composite materials, reinforced materials, or any other suitable material that provides strength to support the part 12 and is resistance to loads applied via the vacuum assembly 14. Non-limiting examples of the flexible material of the third component 46 may include the one or more of polymer materials, elastomeric materials, or any other suitable material that provides flexibility to conform to the face surface 52 of the part 12 and/or resist the load applied due to lifting of the part 12. The third component 46 may be configured of a heat resistant material to handle the parts 12 that are not suitable for manual handling. In certain configurations, the third component 46 may be referred to as an inner skin or inner layer.

The end effector assembly 10 described herein is also configured to minimize undesirable markings on the part 12 during picking and placing of the part 12. For example, undesirable marks on the part 12 may include creases, wrinkles, impressions, dents, twists, etc. Specifically, the third component 46 is configured to prevent the undesirable markings on the part 12 during operation of the end effector assembly 10.

In certain configurations, the third component 46 may include a face 56 (see FIG. 5) that faces away from the pocket 30. That is, the face 56 of the third component 46 is spaced from the pocket 30 and faces outwardly toward the part 12 when the end effector assembly 10 is aligned with the part 12. The face 56 of the third component 46 has a surface area, in which the surface area of the face 56 is large such that when the face 56 engages the part 12 and the vacuum is applied, the forces applied to the part 12 are spread over a large area of the part 12, which assists with preventing undesirable marks on the part 12. That is, by distributing the vacuum flow across (a large surface area of) the third component 46, a force may be applied evenly to (a large surface area of) the face surface 52 of the part 12 via the vacuum, thus assisting in minimizing undesirable markings of the part 12. Generally, the end effector assembly 10 provides areas of rigidity across the part 12 when picking up the part 12 to prevent twisting, bending, or folding of the part 12.

As discussed above, the first component 22, the second component 38, and the third component 46 cooperate with each other to close the pocket 30. As best shown in FIG. 6, the second component 38 and the third component 46 are spaced from each other and generally align with each other relative to the central axis 28. As such, the second component 38 and the third component 46 cooperate to close the pocket 30 of the first component 22. Referring to FIG. 6, the end effector assembly 10 also includes a permeable component 60 contained inside of the pocket 30. Therefore, the permeable component 60 is closed inside of the housing 20, and the permeable component 60 separates the second component 38 and the third component 46 from each other. Optionally, a permeable adhesive may be applied between the second component 38 and the permeable component 60 and/or the third component 46 and the permeable component 60.

Generally, the permeable component 60 extends outwardly transverse to the central axis 28 toward the inner surface 36 of the wall 32 to fill the pocket 30. As such, the permeable component 60 may include an outer periphery 62 that is complementary in configuration to the inner surface 36 of the wall 32. Hence, the permeable component 60 may be the same configuration as the first component 22, e.g., the band.

The permeable component 60 defines a plurality of pores 64 that allow fluid communication therethrough, i.e., through the permeable component 60. By having the pores 64 allow fluid communication through the permeable component 60, fluid flow occurs through the perforations 48 and the pores 64 out of the housing 20 when the vacuum is applied via the vacuum assembly 14. Hence, when the vacuum is applied via the vacuum assembly 14, the fluid flows through the permeable component 60. The pores 64 are spread out across the permeable component 60 to distribute the vacuum across the permeable component 60 and across the third component 46. More specifically, the pores 64 of the permeable component 60 allow the vacuum to spread throughout the permeable component 60 inside of the pocket 30.

In certain configurations, the pores 64 of the permeable component 60 are configured differently from the perforations 48 of the third component 46. For example, the pores 64 of the permeable component 60 are a different size from the perforations 48 of the third component 46. Optionally, in certain configurations, the pores 64 of the permeable component 60 are a larger size than the perforations 48 of the third component 46, and thus, the perforations 48 of the third component 46 are a smaller size than the pores 64 of the permeable component 60.

Referring to FIG. 6, in certain configurations, the pores 64 may include a first set 64A of pores 64 having a first configuration and a second set 64B of pores 64 having a second configuration different from the first configuration of the first set 64A of pores 64. For example, the first configuration of the first set 64A of pores 64 defines a first size and the second configuration of the second set 64B of pores 64 defines a second size; and in certain configurations, the first size is larger than the second size.

Optionally, the first set 64A of pores 64 extends in a first direction and the second set 64B of pores 64 extends in a second direction transverse to the first direction. For example, the first set 64A of pores 64 may be disposed substantially parallel to the central axis 28, and the second set 64B of pores 64 may be disposed transverse to the central axis 28. That is, each of the first set 64A of pores 64 may extend through the permeable component 60 substantially parallel to the central axis 28, and each of the second set 64B of pores 64 extend through the permeable component 60 transverse to the central axis 28.

As one non-limiting example, as shown in FIG. 6, the permeable component 60 is formed as a honeycomb core, and the honeycomb core has the first set 64A of pores 64 and the second set 64B of pores 64. Optionally, the first set 64A of pores 64 of the permeable component 60 are configured larger than the second set 64B of pores 64 of the permeable component 60.

The permeable component 60 may be configured of one or more materials that provide strength to support the part 12 as well as resistance to the loads applied thereto when the vacuum is applied via the vacuum assembly 14. That is, the permeable component 60 may be configured to provide structural rigidity inside of the pocket 30. Said differently, the permeable component 60 may be configured to provide structural support inside of the pocket 30 so that the first component 22, the second component 38, and/or the third component 46 does not move inwardly to an undesirable position or orientation when the vacuum is applied, i.e., the housing 20 does not collapse due to the loads applied thereto via the vacuum assembly 14. Optionally, the permeable component 60 may be configured to flex to accommodate variations in the part 12 due to predetermine tolerances of the part 12, the state of the part 12 (fully cured, etc.), and/or imperfections in the part 12, etc.

Therefore, the permeable component 60 may be formed of a rigid material such that the permeable component 60 maintains its configuration regardless of the task being performed by the end effector assembly 10. Non-limiting examples of the rigid material of the permeable component 60 may include one or more of foam, paper, particulate, elastomeric material, rubber, open-cell structure, alloy (including aluminum), and/or any other suitable material that may provide structural rigidity and fluid flow therethrough. In certain configurations, the permeable component 60 may be formed of one or more materials that is different from the housing 20, i.e., different from the first component 22, the second component 38, and/or the third component 46.

When the permeable component 60 is formed as the honeycomb core, the paper that forms the layers of the honeycomb core may be Nomex^{®} paper of DuPont. That is, the permeable component 60 may be formed of Nomex^{®} paper. It is to be appreciated that the honeycomb core may have a coating thereon. One optional honeycomb core is an aluminum honeycomb core.

Generally, as discussed above, the end effector assembly 10 provides areas of rigidity across the part 12 when picking up the part 12 to prevent twisting, bending, or folding of the part 12, and therefore, the materials of the first component 22, the second component 38, the third component 46, and the permeable component 60 are selected accordingly.

Referring to FIGS. 5 and 6, optionally, the end effector assembly 10 may include a seal 66 attached to the third component 46 and/or the first component 22. For example, the seal 66 may extend from the outer edge 54 of the third component 46. Generally, the seal 66 flares outwardly beyond the third component 46.

As another example, the seal 66 may extend from the second edge 26 of the first component 22 of the housing 20. Generally, the seal 66 flares outwardly beyond the first component 22.

Generally, the seal 66 is configured to engage the part 12. The seal 66 may assist in reducing vacuum flow leakage between the third component 46 and the face surface 52 of the part 12 and/or increase a holding force on the part 12 being picked up. The seal 66 extends to a distal edge 68, and in certain configurations, the entire seal 66, i.e., the seal 66 out to the distal edge 68, engages the part 12 when the part 12 is being picked up which assists in preventing the flow leakage between the third component 46 and the face surface 52 of the part 12.

The seal 66 may be formed of a flexible material in which the seal 66 is capable of being bent and/or stretched without permanent deformation and without breaking when the load is applied due to lifting of the part 12, and return to its original configuration when the load is removed due to releasing of the part 12. Non-limiting examples of the flexible material of the seal 66 may include the one or more of polymer materials, elastomeric materials, or any other suitable material that provides flexibility to conform to the face surface 52 of the part 12.

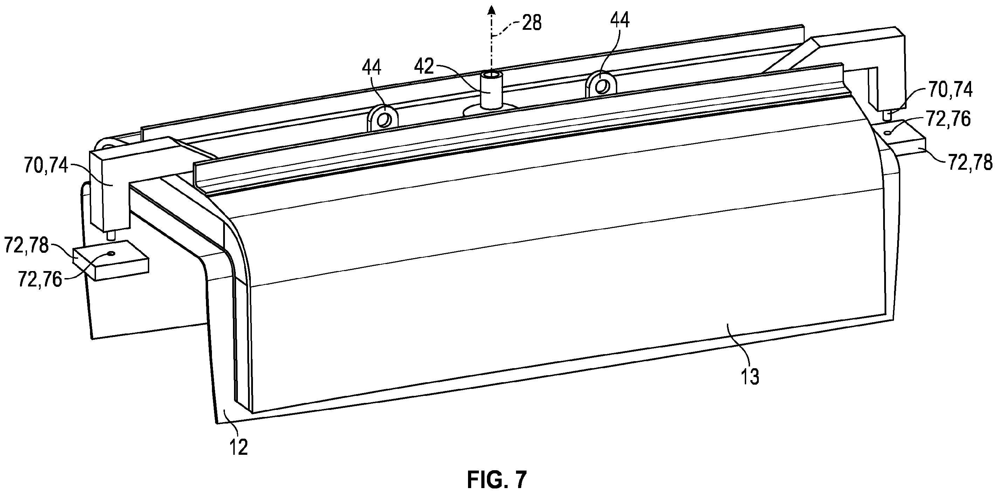

Referring to FIG. 7, a part locating apparatus 70, 72, 74, 76, 78 may be used to ensure that the end effector assembly 10 and/or the part support structure 13 are properly aligned with the part 12 during pick up and placement of the part 12. The part locating apparatus 70, 72, 74, 76, 78 has been removed in FIGS. 1, 2, 8, and 9 (and removed as well in the other figures), for illustrative purposes, but it is to be appreciated that the part locating apparatus 70, 72, 74, 76, 78 is compatible with the configurations of FIGS. 1, 2, 8, and 9 as well as any configuration herein, or any other configuration of the part support structure 13.

The part locating apparatus 70, 72, 74, 76, 78 may include a first locating structure 70 attached to the part support structure 13 and a second locating structure 72 disposed proximal to the part 12 to be picked up and the second locating structure 72 may be disposed proximal to the desired location to place the part 12. The first locating structure 70 and the second locating structure 72 cooperate with each other to properly orientate the part support structure 13 and/or the end effector assembly 10 relative to the part 12.

As non-limiting examples, the first locating structure 70 and the second locating structure 72 may include components that create a mechanical engagement between the first locating structure 70 and the second locating structure 72 and/or may include components that align the part support structure 13 and/or the end effector assembly 10 without physical engagement between the first and second locating structures 70, 72. For example, the first locating structure 70 and the second locating structure 72 may include components that visually align the part support structure 13 and/or the end effector assembly 10 with the part 12. Therefore, the first locating structure 70 and the second locating structure 72 may include one or more of sensors which may include thermal sensors, proximity sensors, contact sensors, etc.; laser targeting components; visual targeting components which may include cameras, scribe lines, etc.; mechanical indexing components which may include one or more of a pin 74 and an aperture 76, etc.

For illustrative purposes only, FIG. 7 illustrates one example of mechanical indexing components having the pin 74 extending from the part support structure 13 and a platform 78 defining the aperture 76 proximal to the part 12. With regards to FIG. 7, it is to be appreciated that the pin 74 may be disposed proximal to the part 12 and the platform 78 defining the aperture 76 may extend from the part support structure 13, or a combination of both configurations extending from the part support structure 13 and disposed proximal to the part 12.

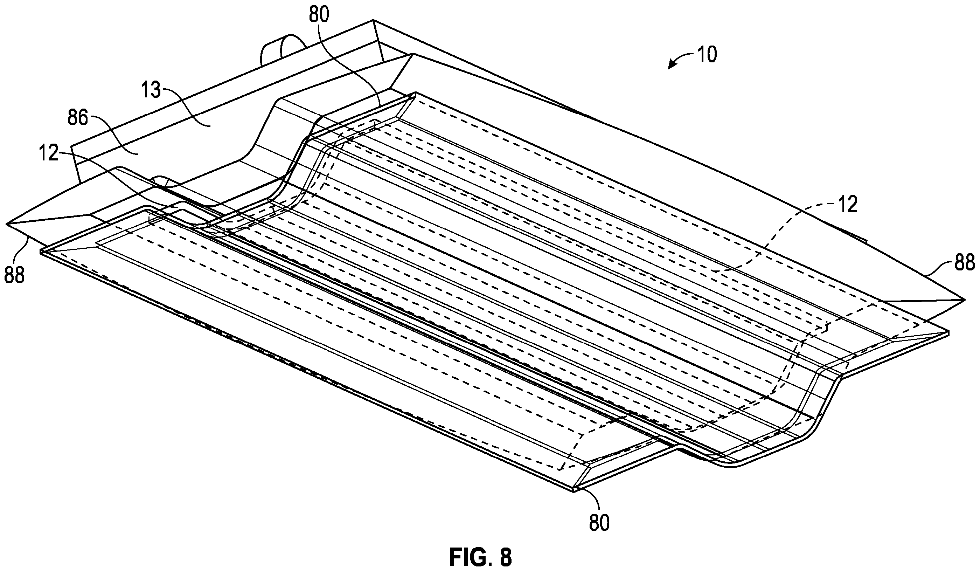

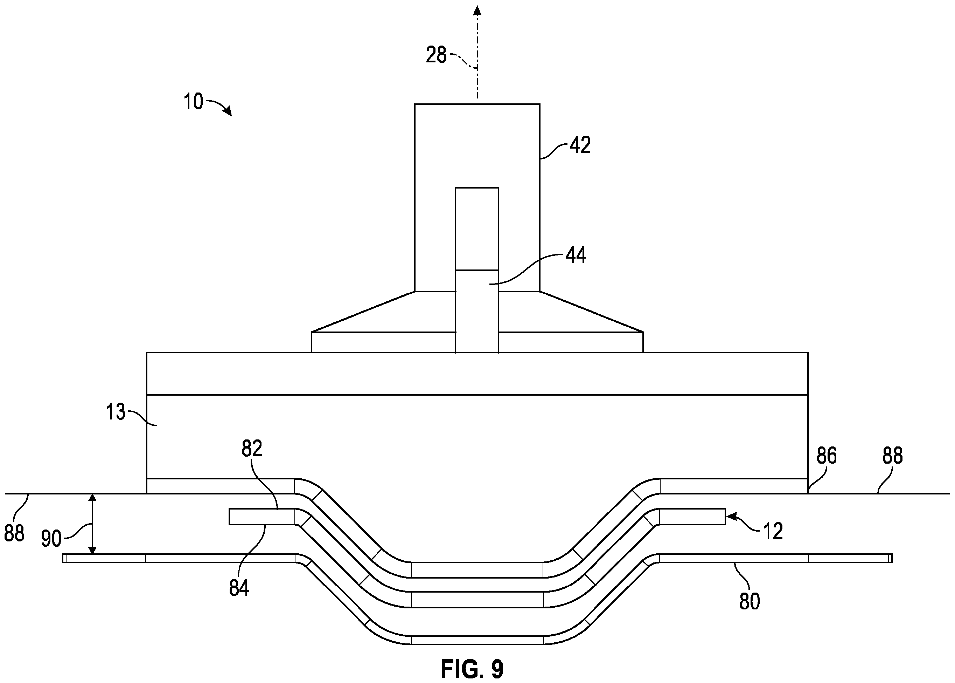

Turning back to the features for compaction, FIGS. 8 and 9 illustrate additional features to perform compaction of the part 12. The part 12 is contained between the part support structure 13 and a base platform 80 during compaction. Therefore, the assembly may include the base platform 80. The part support structure 13 extends beyond the housing 20 and the seal 66 of the end effector assembly 10. As shown in FIG. 8, the part 12 is smaller in size than the base platform 80, and the part 12 is smaller in size than the part support structure 13. Therefore, the part 12 may be completely contained between the part support structure 13 and the base platform 80 during compaction. Hence, the part 12 is completely contained so that the part 12 is isolated from the outside environment during compaction. Optionally, the base platform 80 may be formed of a rigid component, such as a caul sheet, etc., or a flexible membrane.

The part support structure 13 may be contoured to complement a first side 82 of the part 12, i.e, the face surface 52 side of the part 12. Optionally, the base platform 80 may be contoured to complement a second side 84 of the part 12. The part support structure 13 may include a side edge 86 defining a periphery around the part support structure 13. The part support structure 13 may optionally include a seal 88 extending outwardly beyond the side edge 86. In certain configurations, the seal 88 of the part support structure 13 extends completely around the side edge 86. The seal 88 of the part support structure 13 may be attached to the side edge 86. It is to be appreciated that the seal 88 of the part support structure 13 is not illustrated in FIGS. 1, 2, and 7, but the seal 88 may be used with the part support structure 13 of FIGS. 1, 2, and 7.

The second locating structure 72 may be disposed proximal to the base platform 80 for properly aligning the part 12 relative to the base platform 80 for the compaction process. Therefore, the end effector assembly 10 uses the part locating apparatus 70, 72, 74, 76, 78 to align the end effector assembly 10/the part support structure 13 relative to the part 12. The part 12 may be pre-placed on the base platform 80 or the end effector assembly 10 may pick up the part 12 and place the part 12 on the base platform 80 to perform compaction.

Prior to compaction, there may be one or more gaps 90 between the part 12 and the base platform 80 and/or the part support structure 13. The end effector assembly 10 is placed over the part 12 and positioned such that the seal 88 of the part support structure 13 abuts the base platform 80 to contain the part 12, i.e., isolate the part 12 from the outside environment. Next, the vacuum is applied via the vacuum assembly 14 through the end effector assembly 10, and the vacuum created causes the one or more gaps 90 between the part 12 and the part support structure 13 and the base platform 80 to be removed, i.e., the part 12 is compacted. Therefore, the present disclosure includes a method of compacting the part 12. Once the part 12 is compacted, the end effector assembly 10 may then pick and place the part 12 into another location.

Generally, the end effector assembly 10 described herein is configured to perform two different functions, i.e., compaction of the part 12, and pick and place the part 12. As such, the manufacturing process may be more efficient because one machine may perform these two different functions. Also, the vacuum is applied evenly across the entire surface of the part 12 and provides rigidity during compacting and lift.

Therefore, the present disclosure also includes a method of picking and placing the part 12. The machine is actuated to move the end effector assembly 10 to the desired location to pick up the part 12. The machine aligns the end effector assembly 10 relative to the part 12 using the part locating apparatus 70, 72, 74, 76, 78, e.g., the indexing features, to ensure proper placement of the third component 46 relative to the face surface 52 of the part 12. The machine moves the end effector assembly 10 until the face 56 of the third component 46 engages the face surface 52 of the part 12. In certain configurations, once the third component 46 engages the part 12, the vacuum pump 16 is turned on to create the vacuum which pulls the fluid, i.e., air, out of the space 50 between the face 56 of the third component 46 and the face surface 52 of the part 12 and out of the pocket 30 of the housing 20, which causes the third component 46 to attach to the part 12.

In other configurations, the vacuum pump 16 may be turned on before engagement between the third component 46 and the part 12, and for example, once the third component 46 is proximal to or adjacent to the part 12, i.e., not touching the part 12 yet, the vacuum pump 16 may be turned on, and then engagement between the third component 46 and the face surface 52 of the part 12 may occur while the vacuum is continuing to be created.

Due to the permeable component 60 and the perforations 48 of the third component 46, the suction created via the vacuum is spread out over the surface area of the third component 46 and the surface area of the part 12 which assists in minimizing markings on the part 12 when picked up. Once the desired location is reached via the machine, the part 12 is placed in the desired location, and the indexing features, i.e., the part locating apparatus 70, 72, 74, 76, 78, may be used to ensure proper placement of the part 12 in the desired location. Once the part 12 is placed, the vacuum pump 16 is then turned off, which stops the vacuum flow and then the third component 46 detaches from the part 12. Then, the machine may return the end effector assembly 10 to the original location to repeat this process for another part 12.

It is to be appreciated that the order or sequence of performing the methods are for illustrative purposes and other orders or sequences are within the scope of the present teachings. It is to also be appreciated that the methods may include other features not specifically discussed immediately above.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

While the best modes and other configurations for carrying out the disclosure have been described in detail, those familiar with the art to which this disclosure relates will recognize various alternative designs and configurations for practicing the disclosure within the scope of the appended claims. Furthermore, the configurations shown in the drawings or the characteristics of various configurations mentioned in the present description are not necessarily to be understood as configurations independent of each other. Rather, it is possible that each of the characteristics described in one of the examples of a configuration can be combined with one or a plurality of other desired characteristics from other configurations, resulting in other configurations not described in words or by reference to the drawings. Accordingly, such other configurations fall within the framework of the scope of the appended claims.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Accordingly, the disclosure and the figures are to be regarded as illustrative rather than restrictive.

The following Clauses provide some example configurations of the end effector assembly 10 and the assembly as disclosed herein.
Clause 1: An end effector assembly comprising: a housing including a first component having a first edge and a second edge spaced from each other relative to a central axis to define a pocket therebetween, a second component attached to the first edge of the first component, and a third component attached to the second edge of the first component, wherein the first component, the second component, and the third component cooperate with each other to close the pocket; a permeable component contained inside of the pocket; and wherein the third component defines a plurality of perforations to allow fluid communication through the third component.
Clause 2: The end effector assembly of clause 1, wherein the permeable component defines a plurality of pores that allow fluid communication therethrough.
Clause 3: The end effector assembly of clause 2, wherein the pores include a first set of pores having a first configuration and a second set of pores having a second configuration different from the first configuration of the first set of pores.
Clause 4: The end effector assembly of clause 3, wherein each of the first set of pores extend through the permeable component substantially parallel to the central axis, and each of the second set of pores extend through the permeable component transverse to the central axis.
Clause 5: The end effector assembly of one of clauses 3 or 4, wherein the first configuration of the first set of pores defines a first size and the second configuration of the second set of pores defines a second size, wherein the first size is larger than the second size.
Clause 6: The end effector assembly of one of clauses 2-5, wherein the pores of the permeable component are a different size from the perforations of the third component.
Clause 7: The end effector assembly of one of clauses 2-6, wherein the pores of the permeable component are a larger size than the perforations of the third component.
Clause 8: The end effector assembly of any one of the preceding clauses, wherein the permeable component is formed as a honeycomb core.
Clause 9: The end effector assembly of any one of the preceding clauses, wherein the permeable component is formed of Nomex^{®} paper.
Clause 10: The end effector assembly of any one of the preceding clauses, wherein the perforations include a first set of perforations of a first pattern and a second set of perforations of a second pattern different from the first pattern of the first set of perforations.
Clause 11: The end effector assembly of clause 10, wherein the first set of the perforations and the second set of perforations alternate.
Clause 12: The end effector assembly of any one of the preceding clauses, further comprising a seal attached to the third component and/or the first component, and the seal flares outwardly beyond the third component.
Clause 13: The end effector assembly of any one of the preceding clauses, wherein the second component defines an aperture in fluid communication with the pocket.
Clause 14: An assembly configured to move and/or compact a part, the assembly comprising: a part support structure configured to support the part; and an end effector assembly attached to the part support structure, wherein the end effector assembly comprises: a housing including a first component having a first edge and a second edge spaced from each other relative to a central axis to define a pocket therebetween, a second component attached to the first edge of the first component, and a third component attached to the second edge of the first component, wherein the first component, the second component, and the third component cooperate with each other to close the pocket; a permeable component contained inside of the pocket; and wherein the third component defines a plurality of perforations to allow fluid communication through the third component.
Clause 15: The assembly of clause 14, further comprising a seal attached to the third component and/or the first component, and the seal flares outwardly beyond the third component and is configured to engage the part.
Clause 16: The assembly of one of clauses 14 or 15, further comprising a vacuum assembly coupled to the end effector assembly and is configured to create a vacuum to cause the part to engage the third component for moving the part and/or for compacting the part.
Clause 17: The assembly of one of clauses 14-16, further comprising a base platform, wherein the part is completely contained between the part support structure and the base platform during compaction.
Clause 18: The assembly of clause 16, wherein the permeable component defines a plurality of pores that allow fluid communication therethrough such that fluid flow occurs through the perforations and the pores out of the housing when the vacuum is applied via the vacuum assembly.
Clause 19: The assembly of clause 18, wherein the pores include a first set of pores extending in a first direction and a second set of pores extending in a second direction transverse to the first direction.
Clause 20: The assembly of one of clauses 14-19, wherein the perforations include a first set of perforations of a first pattern and a second set of perforations of a second pattern different from the first pattern of the first set of perforations.

## Claims

1. An end effector assembly (10) comprising:
a housing (20) including a first component (22) having a first edge (24) and a second edge (26) spaced from each other relative to a central axis (28) to define a pocket (30) therebetween, a second component (38) attached to the first edge (24) of the first component (22), and a third component (46) attached to the second edge (26) of the first component (22), wherein the first component (22), the second component (38), and the third component (46) cooperate with each other to close the pocket (30);
a permeable component (60) contained inside of the pocket (30); and
wherein the third component (46) defines a plurality of perforations (48) to allow fluid communication through the third component (46).

2. The end effector assembly (10) of claim 1, wherein the permeable component (60) defines a plurality of pores (64) that allow fluid communication therethrough.

3. The end effector assembly (10) of claim 2, wherein the pores (64) include a first set (64A) of pores (64) extending in a first direction and a second set (64B) of pores (64) extending in a second direction different from the first direction of the first set (64A) of pores (64).

4. The end effector assembly (10) of claim 3, wherein each of the first set (64A) of pores (64) extend through the permeable component (60) substantially parallel to the central axis (28), and each of the second set (64B) of pores (64) extend through the permeable component (60) transverse to the central axis (28).

5. The end effector assembly (10) of claim 4, wherein the first configuration of the first set (64A) of pores (64) defines a first size and the second configuration of the second set (64B) of pores (64) defines a second size, wherein the first size is larger than the second size.

6. The end effector assembly (10) of any of claims 2-5, wherein the pores (64) of the permeable component (60) are a larger size than the perforations (48) of the third component (46).

7. The end effector assembly (10) of any of claims 2-6, wherein the permeable component (60) is formed as a honeycomb core.

8. The end effector assembly (10) of any of claims 1-7, wherein the perforations (48) include a first set (48A) of perforations (48) of a first pattern and a second set (48B) of perforations (48) of a second pattern different from the first pattern of the first set (48A) of perforations (48).

9. The end effector assembly (10) of claim 8, wherein the first set (48A) of the perforations (48) and the second set (48B) of perforations (48) alternate.

10. The end effector assembly (10) of any of claims 1-9, further comprising a seal (66) attached to the third component (46) and/or the first component (22), and the seal (66) flares outwardly beyond the third component (46).

11. The end effector assembly (10) of any of claims 1-10, wherein the second component (38) defines an aperture (40) in fluid communication with the pocket (30).

12. An assembly configured to move and/or compact a part (12), the assembly comprising:
a part support structure (13) configured to support the part (12); and
an end effector assembly (10) attached to the part support structure (13), wherein the end effector assembly (10) is an end effector assembly (10) according to anyone of claims 1-11.

13. The assembly of claim 12, further comprising a base platform (80), wherein the part (12) is completely contained between the part support structure (13) and the base platform (80) during compaction.

14. The assembly of claim 12 or claim 13, further comprising a vacuum assembly (14) coupled to the end effector assembly (10) and is configured to create a vacuum to cause the part (12) to engage the third component (46) for moving the part (12) and/or for compacting the part (12).

15. The assembly of claim 14, wherein the permeable component (60) defines a plurality of pores (64) that allow fluid communication therethrough such that fluid flow occurs through the perforations (48) and the pores (64) out of the housing (20) when the vacuum is applied via the vacuum assembly (14).
